# FASCICULE DE BREVET EUROPEEN

(11) **EP 2 882 633 B1**
(45) Date de publication et mention de la délivrance du brevet: **13.06.2018**
(21) Numéro de dépôt: 13745044.1
(22) Date de dépôt: 31.07.2013
(51) Int. Cl.: B62D 35/00

(54) **DISPOSITIF DEFLECTEUR ET VEHICULE AUTOMOBILE DONT LE BOUCLIER AVANT PORTE LEDIT DISPOSITIF DEFLECTEUR**
DEFLEKTORVORRICHTUNG UND KRAFTFAHRZEUG MIT VORDERBLENDE MIT DIESER DEFLEKTORVORRICHTUNG
DEFLECTOR DEVICE AND MOTOR VEHICLE IN WHICH THE FRONT SHIELD CARRIES SAID DEFLECTOR DEVICE

(30) Priorité: 10.08.2012 FR 1257751
(43) Date de publication de la demande: 17.06.2015
(73) Titulaire: PSA Automobiles SA, 78300 Poissy (FR); Compagnie Plastic Omnium, 69007 Lyon (FR)
(72) Inventeur: GUINOIS, Pascal, F-91680 Bruyeres Le Chatel (FR); DROUOT, Laurent, F-91280 Saint Pierre du Perray (FR); GILOTTE, Philippe, F-01470 Benonces (FR)
(74) Mandataire: Fosse, Danièle
(86) Numéro de dépôt international: PCT/EP2013/066088
(87) Numéro de publication internationale: WO 2014/023630

(56) Documents cités:
- EP-A1- 1 541 452
- DE-U1- 9 400 342
- JP-U- H0 378 686
- US-A1- 2010 052 361

## Description

La présente invention revendique la priorité de la demande française 1257751 déposée le 10 août 2013.

La présente invention concerne un véhicule automobile dont le bouclier avant comprend plusieurs déflecteurs montés pivotants entre une position rabattue sous le bouclier avant et une position dans laquelle les déflecteurs font saillie vers le bas.

Des véhicules comportant de tels déflecteurs sont décrits par exemple dans les brevets français 2 821 593, 2 927 303 et 2 864 811.

De tels déflecteurs sont destinés à réduire la trainée du véhicule et sa consommation notamment à vitesse élevée.

Lorsque les déflecteurs sont en position rabattue sous le bouclier avant, ceux-ci sont protégés à l'égard des chocs contre des obstacles tels que les bords de trottoir.

Cette position rabattue sous le bouclier convient par conséquent pour la circulation à faible vitesse dans les villes ou sur des routes comportant des creux et des bosses.

De tels déflecteurs sont particulièrement utiles sur des véhicules ayant une importante garde au sol tels que les 4X4.

Ces véhicules, en effet, consomment beaucoup de carburant du fait de l'importante trainée qui est due à la garde au sol.

Le document EP 1 545 452 propose un dispositif déflecteur mobile formé d'une série de panneaux pivotants entre une position rabattue et une seconde position dépliée sensiblement perpendiculaire à la première position.

Le but de la présente invention est d'apporter des perfectionnements aux déflecteurs pivotants connus.

Ce but est atteint, selon l'invention, grâce à un dispositif déflecteur mobile d'un bouclier courbé de véhicule, comprenant un déflecteur central et deux déflecteurs latéraux, formant essentiellement trois cordes agencées sur toute la longueur du bouclier, chacun des trois déflecteurs étant monté pivotant entre une position rabattue et une seconde position dépliée sensiblement perpendiculaire à la première position, caractérisé en ce qu'il comporte de plus des moyens pour commander le pivotement des trois déflecteurs, lesdits moyens de commande comprenant deux motoréducteurs, chacun de ces derniers étant directement relié à l'un des deux déflecteurs latéraux, chacun desdits déflecteurs latéraux étant reliés au déflecteur central par des moyens permettant d'entraîner ce déflecteur central lors de leur pivotement entre lesdites première et seconde positions.

Ainsi le déflecteur ne couvre pas seulement la ligne inférieure en face avant, dans une zone essentiellement rectiligne mais couvre toute la ligne inférieure en face avant, très curviligne, y compris les deux retours jusqu'au roues. Ceci permet d'avoir une barrière très en avant, jusqu'au roues, ce qui permet de chasser l'air vers les côtés. C'est cette combinaison d'un barrière en avant, sur toute la longueur, qui permet une véritable efficacité du déflecteur.

Lorsque les trois déflecteurs sont montés sur le bouclier avant, dans la première position, c'est-à-dire rabattus sous le bouclier avant, ces déflecteurs sont protégés à l'égard des chocs et le véhicule peut circuler en ville ou sur de mauvaises routes voire des chemins sans risquer de détériorer les déflecteurs.

Lorsque les trois déflecteurs sont dans la seconde position, c'est-à-dire dépliée vers le bas, ceux-ci réduisent efficacement la trainée du véhicule notamment lorsque celui-ci circule à vitesse élevée. Cette grande efficacité des déflecteurs résulte notamment du fait qu'ils sont répartis sur la totalité de la largeur de la partie centrale avant et des côtés latéraux du bouclier avant.

Les 3 déflecteurs peuvent être alignés (avec alors en position dépliée une même cote en Z de leur ligne basse). Alternativement, les déflecteurs latéraux peuvent « descendre » plus haut ou plus bas que le déflecteur frontal. La réduction de la trainée aérodynamique est tout particulièrement améliorée si ces déflecteurs latéraux descendent plus bas que le déflecteur frontal, autrement dit si la garde au sol définie par ces déflecteurs latéraux est inférieure à celle définie par le déflecteur frontal.

De préférence, chacun des deux déflecteurs latéraux est articulé suivant un axe formant un angle avec l'axe d'articulation du déflecteur central.

Le dispositif déflecteur comprend des moyens pour commander le pivotement des trois déflecteurs.

Selon l'invention, lesdits moyens de commande comprennent deux motoréducteurs, chacun de ces derniers étant directement relié à l'un des deux déflecteurs latéraux.

Les deux déflecteurs latéraux sont chacun reliés au déflecteur central par des moyens permettant d'entraîner ce déflecteur central lors de leur pivotement entre lesdites première et seconde positions.

Ces moyens permettent de simplifier la réalisation en évitant l'utilisation de bielles ou de câbles spécifiques pour commander le pivotement du déflecteur central.

Dans un autre mode de réalisation, le pivotement du déflecteur central est rappelé vers l'une desdites première et seconde positions par un ressort de rappel.

Dans une version particulièrement avantageuse de l'invention, chacun des deux déflecteurs latéraux porte à son extrémité arrière un déflecteur additionnel qui, lorsque les trois déflecteurs sont montés sur un bouclier et disposés dans la seconde position, est dirigé vers l'extérieur du véhicule.

Ce déflecteur additionnel augmente encore davantage l'efficacité de l'ensemble des déflecteurs sur le plan aérodynamique.

L'invention a également pour objet un véhicule automobile comportant un bouclier avant et un dispositif déflecteur tel que décrit précédemment.

De préférence, lorsque selon un mode préféré chacun des deux déflecteurs latéraux porte à son extrémité arrière un déflecteur additionnel, lorsque les trois déflecteurs sont dans la seconde position, le déflecteur additionnel est situé dans un plan sensiblement vertical et parallèle à l'axe transversal du véhicule.

De préférence, dans ladite seconde position, le bord extérieur du déflecteur additionnel est situé dans un plan sensiblement vertical passant par la face extérieure de la roue avant du véhicule.

Ainsi, ce déflecteur additionnel minimise la trainée aérodynamique engendrée par la roue.

D'autres particularités et avantages de l'invention apparaîtront encore tout au long de la description ci-après.

Aux dessins annexés, donnés à titre d'exemples, non limitatifs :
- la figure 1 est une vue frontale partielle d'un véhicule automobile selon l'invention équipé de déflecteurs en position rabattue sous le bouclier avant,
- la figure 2 est une vue analogue à la figure 1 montrant les déflecteurs en position dépliée vers le bas,
- la figure 3 est une vue montrant le dessous du bouclier avant du véhicule, les déflecteurs en position rabattue sous le bouclier, les bielles et le motoréducteur de commande du pivotement des déflecteurs,
- la figure 4 est une vue analogue à la figure 2 montrant les déflecteurs latéraux équipés de déflecteurs additionnels ainsi que les bielles et le motoréducteur de commande du pivotement des déflecteurs,
- la figure 5 est une vue analogue à la figure 4 montrant les déflecteurs en position rabattue sous le bouclier avant,
- la figure 6 est une vue analogue à la figure 3 montrant les déflecteurs en position dépliée et un mécanisme de commande du pivotement constitué de câbles et d'un motoréducteur,
- la figure 7 est une vue analogue à la figure 6 montrant un mécanisme de commande du pivotement par deux motoréducteurs.

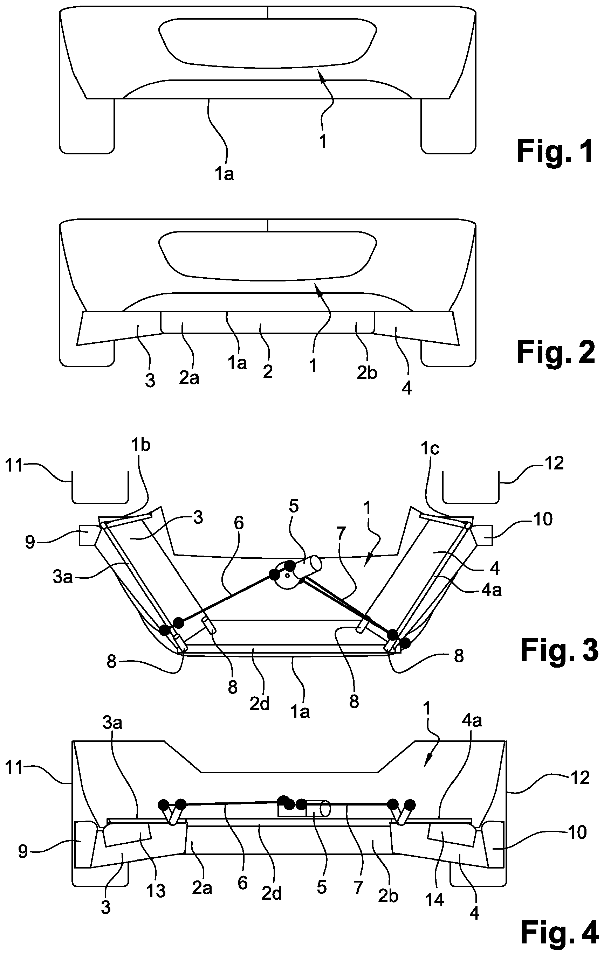

Les figures 1 et 2 représentent un véhicule automobile dont le bouclier avant 1 comprend des déflecteurs 2, 3, 4 montés pivotant entre une position dans laquelle ils sont rabattus sous le bouclier avant 1 et une position (voir figure 2) dans laquelle ces déflecteurs font saillie vers le bas.

Conformément à l'invention, le bouclier avant 1 porte un déflecteur central 2 et deux déflecteurs latéraux 3, 4, le déflecteur central 2 s'étendant, comme montré sur la figure 3, près du bord inférieur avant 1a du bouclier 1 et chacun des deux déflecteurs latéraux 3, 4 s'étendant entre une extrémité latérale 2a, 2b du déflecteur central 2 et un bord latéral arrière inférieur 1b, 1c du bouclier 1.

La figure 2 montre par ailleurs une variante préférée de l'invention selon laquelle les déflecteurs latéraux ont une hauteur égale à la hauteur du bouclier central au niveau des extrémités des déflecteurs latéraux proches du déflecteur central, hauteur qui augmente au fur et à mesure que l'on s'éloigne du déflecteur central, de sorte que ces déflecteurs latéraux sont essentiellement d'une plus grande hauteur que le déflecteur central et plus proche de la route que celui-ci.

Chacun des trois déflecteurs 2, 3, 4 est monté pivotant (voir figure 3) entre une position rabattue sous le bouclier 1 et une seconde position (voir figures 2 et 4) dépliée vers le bas sensiblement perpendiculaire à la première position.

La figure 3 montre en outre que chacun des deux déflecteurs latéraux 3, 4 est articulé suivant un axe 3a, 4a formant un angle avec l'axe d'articulation 2a du déflecteur central 2.

Cet angle est tel que les axes 2a, 3a, 4a des déflecteurs 2, 3, 4 soient inscrits dans le contour extérieur du bouclier avant 1.

Les déflecteurs 2, 3, 4 sont sensiblement plans.

Ils peuvent être en matière plastique ou en métal.

Lorsque ces déflecteurs 2, 3, 4 sont en position rabattue contre le dessus du bouclier avant 1, ils peuvent être totalement invisibles de l'extérieur, comme montré par la figure 1.

Le véhicule automobile selon l'invention comprend également des moyens pour commander le pivotement des trois déflecteurs 2, 3, 4.

Dans l'exemple représenté sur les figures 3 à 5, ces moyens de commande comprennent un motoréducteur 5 et des bielles 6, 7 entraînées par le motoréducteur 5 et reliés aux deux déflecteurs latéraux 3, 4.

Les deux déflecteurs latéraux 3, 4 sont chacun reliés au déflecteur central 2 par des moyens permettant d'entraîner ce déflecteur central 2 lors de leur pivotement entre les première et seconde positions définies plus haut.

Dans l'exemple représenté sur la figure 3, ces moyens sont constitués par des doigts 8 fixés à une extrémité du déflecteur latéral 3 et 4 venant en prise sur chacun des bords 2a, 2b du déflecteur central 2.

Ainsi, le pivotement des déflecteurs latéraux 3, 4 fait également pivoter le déflecteur central 2.

Le pivotement du déflecteur central 2 peut également être rappelé vers l'une des première et seconde positions par un ressort de rappel.

Dans l'exemple représenté sur les figures 3 et 4, chacun des deux déflecteurs latéraux 3, 4 porte à son extrémité arrière un déflecteur additionnel 9, 10 qui, lorsque les trois déflecteurs 2, 3, 4 sont dans la seconde position (voir figure 4), est dirigé vers l'extérieur du véhicule).

De plus, lorsque les trois déflecteurs 2, 3, 4 sont dans cette seconde position, le déflecteur additionnel 9, 10 est situé dans un plan sensiblement vertical et parallèle à l'axe transversal du véhicule.

De plus, le bord extérieur 9a, 10a du déflecteur additionnel 9, 10 est situé dans un plan sensiblement vertical situé sur la face extérieure de la roue avant 11, 12 du véhicule.

Ce déflecteur additionnel 9, 10 permet ainsi de minimiser la trainée aérodynamique exercée par les deux roues avant 11, 12 du véhicule.

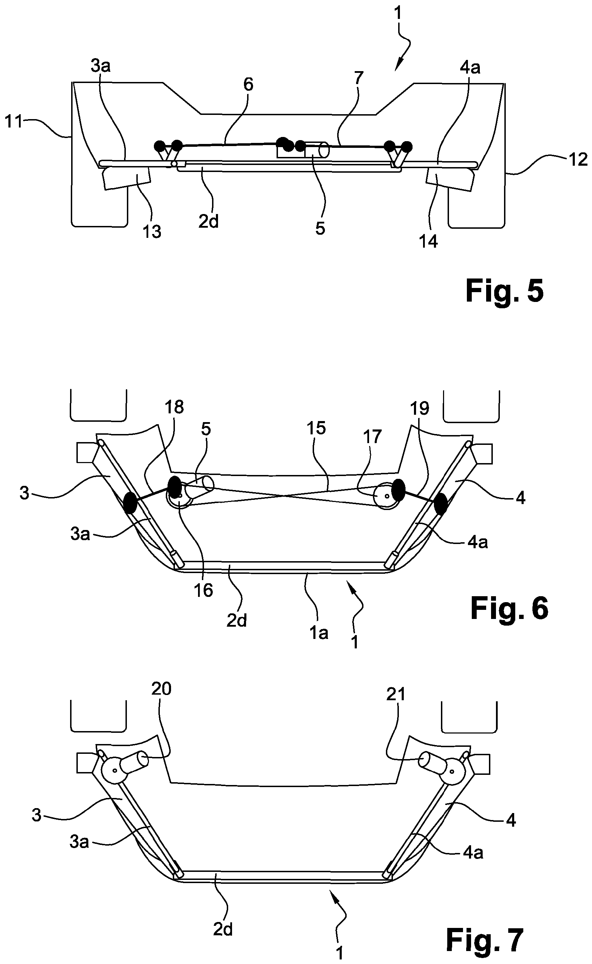

Dans l'exemple représenté sur les figures 4 et 5, le dessous du bouclier avant 1 porte en outre deux déflecteurs latéraux fixes 13, 14 qui restent en place en faisant saillie vers le bas, lorsque les autres déflecteurs 2, 3, 4 sont rabattus contre le dessous du bouclier 1.

Bien entendu l'invention n'est pas limitée aux exemples que l'on vient de décrire et on peut apporter à ceux-ci de nombreuses modifications.

Ainsi, les bielles 6, 7 entraînées par le motoréducteur 5 peuvent être remplacées par un système d'entraînement comprenant, comme montré sur la figure 6, un câble 15 enroulé en huit sur deux poulies 16, 17 dont l'une 16 est entraînée par le motoréducteur 5.

Ces deux poulies 16, 17 sont reliées chacune à une bielle 18, 19 qui commande le pivotement des déflecteurs latéraux 3, 4.

Dans l'exemple représenté sur la figure 7, le système d'entraînement par bielles ou câbles est remplacé par deux motoréducteurs 20, 21 qui sont chacun directement relié à l'axe de pivotement 3a, 4a des déflecteurs latéraux 3, 4.

Le pivotement des trois déflecteurs 2, 3, 4 peut être déclenché par un bouton poussoir actionné par le conducteur du véhicule.

Ce pivotement peut également être commandé automatiquement lorsque le véhicule dépasse une certaine vitesse.

Le véhicule que l'on vient de décrire présente de nombreux avantages.

Les trois déflecteurs 2, 3, 4 et les deux déflecteurs additionnels 9, 10 permettent, lorsqu'ils sont dans la position active, représentée sur la figure 4, de réduire considérablement la trainée du véhicule lorsque celui-ci circule à vitesse élevée.

Cet avantage est important notamment dans le cas des véhicules du type 4 X 4 qui présentent une garde au sol élevée et pour lesquels on peut installer des déflecteurs ayant une hauteur qui peut atteindre 140 mm.

## Revendications

1. Dispositif déflecteur mobile d'un bouclier courbé (1) de véhicule, comprenant un déflecteur central (2) et deux déflecteurs latéraux (3, 4), formant essentiellement trois cordes agencées sur toute la longueur du bouclier, chacun des trois déflecteurs (2, 3, 4) étant monté pivotant entre une première position rabattue et une seconde position dépliée sensiblement perpendiculaire à la première position, **caractérisé en ce qu'**il comporte de plus des moyens pour commander le pivotement des trois déflecteurs (2, 3, 4), lesdits moyens de commande comprenant deux motoréducteurs (20, 21), chacun de ces derniers étant directement relié à l'un des deux déflecteurs latéraux (3, 4), chacun desdits déflecteurs latéraux (3, 4) étant reliés au déflecteur central (2) par des moyens permettant d'entraîner ce déflecteur central (2) lors de leur pivotement entre lesdites première et seconde positions

2. Dispositif déflecteur selon la revendication 1, **caractérisé en ce qu'**en position dépliée, les points bas des deux déflecteurs latéraux sont plus bas que celui du déflecteur central.

3. Dispositif déflecteur selon la revendication 2, **caractérisé en ce que** le bord d'un déflecteur latéral en contact avec le déflecteur central à un point bas aligné sur le point bas du déflecteur central.

4. Dispositif déflecteur selon l'une quelconque des revendications précédentes, **caractérisé en ce que** chacun des deux déflecteurs latéraux (3, 4) est articulé suivant un axe (3a, 4a) formant un angle avec l'axe d'articulation (2a) du déflecteur central (2).

5. Dispositif déflecteur selon la revendication 1, **caractérisé en ce que** le pivotement du déflecteur central (2) est rappelé vers l'un desdites première et seconde positions par un ressort de rappel.

6. Dispositif déflecteur selon l'une quelconque des revendications 1 à 5, **caractérisé en ce que** chacun des deux déflecteurs latéraux (3, 4) porte à son extrémité arrière un déflecteur additionnel (9, 10) qui, lorsque les trois déflecteurs (2, 3, 4) sont montés sur un bouclier et disposés dans la seconde position, est dirigé vers l'extérieur du véhicule.

7. Véhicule automobile comportant un bouclier avant et un dispositif déflecteur selon l'une quelconque des revendications précédentes.

## Patentansprüche

1. Bewegliche Deflektorvorrichtung einer gewölbten Kraftfahrzeug-Vorderblende (1), die einen zentralen Deflektor (2) und zwei seitliche Deflektoren (3, 4) umfasst, die im Wesentlichen drei Spannen bilden, die auf der gesamten Länge der Blende eingerichtet sind, wobei jeder der drei Deflektoren (2, 3, 4) zwischen einer ersten zurückgeklappten Position und einer zweiten ausgefahrenen Position im Wesentlichen senkrecht zu der ersten Position schwenkend montiert sind, **dadurch gekennzeichnet, dass** sie außerdem Mittel zum Steuern des Schwenkens der drei Deflektoren (2, 3, 4) umfasst, wobei die Steuermittel zwei Getriebemotoren (20, 21) umfassen, wobei jeder dieser Letzteren direkt mit einem der zwei seitlichen Deflektoren (3, 4) verbunden ist, wobei jeder der seitlichen Deflektoren (3, 4) mit dem zentralen Deflektor (2) durch Mittel verbunden ist, die es erlauben, diesen zentralen Deflektor (2) bei ihrem Schwenken zwischen der ersten und zweiten Position anzutreiben.

2. Deflektorvorrichtung nach Anspruch 1, **dadurch gekennzeichnet, dass** die Tiefpunkte der zwei seitlichen Deflektoren in zurückgeklappten Position tiefer sind als der des zentralen Deflektors.

3. Deflektorvorrichtung nach Anspruch 2, **dadurch gekennzeichnet, dass** der Rand eines seitlichen Deflektors in Berührung mit dem zentralen Deflektor einen Tiefpunkt hat, der auf dem Tiefpunkt des zentralen Deflektors ausgerichtet ist.

4. Deflektorvorrichtung nach einem der vorhergehenden Ansprüche, **dadurch gekennzeichnet, dass** jeder der zwei seitlichen Deflektoren (3, 4) entlang einer Achse (3a, 4a) angelenkt ist, die einen Winkel mit der Anlenkachse (2a) des zentralen Deflektors (2) bildet.

5. Deflektorvorrichtung nach Anspruch 1, **dadurch gekennzeichnet, dass** das Schwenken des zentralen Deflektors (2) zu einer der ersten und zweiten Position von einer Rückstellfeder zurückgestellt wird.

6. Deflektorvorrichtung nach einem der Ansprüche 1 bis 5, **dadurch gekennzeichnet, dass** jeder der zwei seitlichen Deflektoren (3, 4) an seinem hinteren Ende einen zusätzlichen Deflektor (9, 10) trägt, der, wenn die drei Deflektoren (2, 3, 4) auf eine Blende montiert und in der zweiten Position angeordnet sind, zur Außenseite des Fahrzeugs gerichtet ist.

7. Kraftfahrzeug, das eine Vorderblende und eine Deflektorvorrichtung nach einem der vorhergehenden Ansprüche umfasst.

## Claims

1. A mobile deflector device of a curved vehicle shield (1), including a central deflector (2) and two lateral deflectors (3, 4) essentially forming three chords arranged over the entire length of the shield, each of the three deflectors (2, 3, 4) being pivotably mounted between a first folded position and a second unfolded position substantially perpendicular to the first position, **characterized in that** it comprises in addition means for controlling the pivoting of the three deflectors (2, 3, 4), said control means including two geared motors (20, 21), each of these latter being directly connected to one of the two lateral deflectors (3, 4), each of said lateral deflectors (3, 4) being connected to the central deflector (2) by means permitting the driving of this central deflector (2) during their pivoting between said first and second positions.

2. The deflector device according to Claim 1, **characterized in that** in unfolded position, the low points of the two lateral deflectors are lower than that of the central deflector.

3. The deflector device according to Claim 2, **characterized in that** the edge of a lateral deflector in contact with the central deflector has a low point aligned on the low point of the central deflector.

4. The deflector device according to any one of the preceding claims, **characterized in that** each of the two lateral deflectors (3, 4) is articulated following an axis (3a, 4a) forming an angle with the articulation axis (2a) of the central deflector (2).

5. The deflector device according to Claim 1, **characterized in that** the pivoting of the central deflector (2) is returned toward one of said first and second positions by a return spring.

6. The deflector device according to any one of Claims 1 to 5, **characterized in that** each of the two lateral deflectors (3, 4) carries at its rear end an additional deflector (9, 10) which, when the three deflectors (2, 3, 4) are mounted on a shield and are disposed in the second position, is directed toward the exterior of the vehicle.

7. A motor vehicle comprising a front shield and a deflector device according to any one of the preceding claims.
